# EUROPEAN PATENT SPECIFICATION

(11) **EP 0 469 780 B1**
(45) Date of publication and mention of the grant of the patent: **31.08.1994**
(21) Application number: 91306750.0
(22) Date of filing: 24.07.1991
(51) Int. Cl.: F25J 3/00, B01D 5/00

(54) **Boiling liquefied gas**
Tiefsieden von verflüssigtem Gas
Ebullition de gaz liquéfié

(30) Priority: 31.07.1990 GB 9016766
(43) Date of publication of application: 05.02.1992
(73) Proprietor: The BOC Group plc, Windlesham Surrey GU20 6HJ (GB)
(72) Inventor: Lavin, John Terence, Guildford, Surrey (GB)
(74) Representative: Wickham, Michael

(56) References cited:
- EP-A- 0 410 832
- DE-A- 1 949 609
- US-A- 4 606 745
- US-A- 4 699 209

## Description

This invention relates to boiling liquefied gas. In particular, it relates to boiling liquid oxygen, typically by heat exchange with condensing nitrogen vapour. The source of the liquid oxygen may be the lower pressure column of a double rectification column comprising a lower pressure rectification column and a higher pressure rectification column. The source of the nitrogen vapour may be the higher pressure column.

In an air separation process employing a double rectification column, it is typically preferred to operate the lower pressure column at an average pressure between 1 and 1.5 bar. In order to provide an adequate up-flow of vapour through liquid-vapour contact means in the column, it is necessary to reboil liquid oxygen which is formed as a product of the air separation. The reboiling is performed by heat exchange with nitrogen vapour from the top of the higher pressure column. The nitrogen vapour is itself at least partially condensed, and at least some of the condensate is returned to the higher pressure column to act as a source of reflux for that column. In some modern condenser-reboilers, the heat exchange between the boiling liquid oxygen and the condensing nitrogen is effected in a plate-fin heat exchanger. An example of such a heat exchanger is described in US-A-3 384 154. Such heat exchangers offer the advantage of being relatively compact and are characterised by having high heat exchange surface areas as a result of the presence of the fins. An alternative form of heat exchanger that may be employed uses tubes rather than plates. The tubes may have enhanced boiling surfaces.

It is desirable to conduct the heat exchange between the boiling oxygen and the condensing nitrogen relatively efficiently, that is to say it is desirable to minimise the temperature difference between the boiling liquid and the condensing vapour. The lower the temperature difference, hence the lower is the pressure at which the nitrogen vapour needs to be supplied to the condenser-reboiler. This nitrogen supply pressure is in effect the pressure at the top of the higher pressure column, which is directly related to the pressure at which the air is introduced into the higher pressure column. Thus, the more efficient the heat exchange between the condensing nitrogen and the boiling oxygen, the less is the work that needs to be done in compressing the air stream to be separated so as to raise it to a pressure suitable for its introduction into the higher pressure column.

The condenser-reboiler is normally at least partially immersed in a volume of liquid oxygen in a sump at the bottom of the lower pressure column. The boiling passages extend vertically from bottom to top of the condenser-reboiler and are open at both ends. Boiling of the liquid oxygen in each boiling passage tends to create a differential pressure between the liquid head in the sump and the height of the liquid in the boiling passages. Accordingly, a positive flow of liquid oxygen into and through the boiling passages is induced. This is referred to in the art as 'thermosiphoning', since it is the heating of the liquid oxygen in the heat exchanger passages that causes the siphoning effect to occur. The liquid head is however a source of inefficiency since the liquid oxygen at the level of the inlets to the boiling passages at the bottom of the heat exchanger forming the condenser-reboiler is at a temperature below its boiling point at the prevailing pressure. Accordingly, as the liquid oxygen is urged upwardly through the boiling passages as a result of the thermosiphoning effect, so it is first heated from below its saturation temperature to its saturation temperature, and then superheated to a temperature at which boiling begins. As a result, a "pinch" is created and the temperature difference between the vapour leaving the top of a boiling passage in the heat exchanger (which vapour may have liquid entrained in it) and the temperature of the walls defining the passage is typically in the order of 1.5K.

In relatively large plants, the sump of the lower pressure column is typically of a larger diameter than the rest of the column. This enables a larger number of heat exchange units to be accommodated in the sump, and hence enables more efficient boiling to be obtained. Another alternative is to conduct some of the reboiling of the liquid oxygen outside the lower pressure column in a separate vessel in which heat exchange units operating on the thermosiphon principle are deployed. Both these practices, however, add considerably to the that capital cost of the air separation plant.

An alternative to a condenser-reboiler through which the oxygen flows upwards as a result of the thermosiphon effect is proposed in our European patent application EP-A-303 492. The kind of condenser-reboiler described therein employs a falling film of liquid oxygen. The falling film is created by spraying liquid oxygen onto a porous heat transfer surface. The liquid oxygen is then allowed to flow down the surface under gravity. There is therefore generally a need to recirculate unboiled liquid oxygen. A pump is needed for this purpose. A falling film condenser-reboiler is also described in US patent specification 4 599 097.

EP-A-0 410 832 (which was published on 30th January 1991 and which therefore falls for consideration under Article 54(3) EPC but not under Article 56 EPC) relates to apparatus for vaporising oxygen comprising main and auxiliary heat exchangers in the bottom of a lower pressure rectification column forming part of a double rectification column. The main heat exchanger is mounted so as to be at least partially immersed if operation of the double column is for any reason halted. The auxiliary heat exchanger is capable of ensuring alone liquid vaporisation when the main heat exchanger is at least partially immersed. As described with reference to Figure 6 of EP-A-0 410 832, the main heat exchanger may be of the downflow kind and the auxiliary heat exchanger, of the thermosiphon kind, is located below the main heat exchanger. In normal operation, only part of the liquid oxygen passing through the main heat exchanger is vaporised. The remaining liquid is collected in a bath in which the auxiliary heat exchanger is located.

The falling film kind of boiler described in our European patent application EP-A-303 492 suffers from the disadvantage of requiring pumping of the liquefied gas whereas the conventional kind of thermosiphon boiler operates with an unduly high temperature difference between the liquefied gas and the walls of the passages in which it is boiled. The present invention relates to a method and apparatus whereby both these difficulties may be ameliorated.

According to the present invention there is provided a method of boiling a liquefied gas, comprising creating a falling film of the liquefied gas down each of a multiplicity of first heat transfer surfaces defining a set of first heat exchange passages for boiling the liquefied gas, heating the first surfaces so as to boil some of the descending liquid, allowing unboiled liquefied gas to fall into a volume of the liquefied gas below said first surfaces, in which volume are at least partially immersed a multiplicity of second heat transfer surfaces defining a set of second passages for boiling the liquefied gas, causing liquefied gas to flow through the second passages, and heating the second heat transfer surfaces so as to boil at least some of the liquefied gas passing through the second passages, each first heat exchange surface having nucleation sites for the formation of vapour bubbles, the nucleation sites being provided by a porous metal coating in which the pores are open and communicate with one another.

The invention also provides apparatus for boiling a liquefied gas, comprising a multiplicity of first heat transfer surfaces defining a set of first heat exchange passages each for boiling a falling film of the liquefied gas, said first passages having outlets arranged to permit in use unboiled liquid to fall into a vessel adapted to contain below said outlets a volume of the liquefied gas, means for heating said first heat transfer surfaces so as in operation to boil some of the descending liquid, a multiplicity of second heat transfer surfaces defining a set of second heat exchange passages for the boiling liquefied gas, said second heat exchange passages being adapted for the flow of the liquefied gas therethrough and being disposed such that in use they are at least partially immersed in a volume of liquefied gas in a container, and means for heating the second heat transfer surfaces so as to boil at least some of the liquefied gas passing therethrough, each first heat exchange surface having nucleation sites for the formation of vapour bubbles, the nucleation sites being provided by a porous coating in which the pores are open and communicate with one another.

Preferably, the first and second heat transfer surfaces are each heated by a heat exchange fluid. Preferably, the heat exchange fluid is a condensing vapour of different composition from the liquefied gas. Preferably, the heat exchange fluid used to heat the first heat transfer surfaces has the same composition as that used to heat the second heat transfer surfaces, both fluids being taken from the same source.

Typically, the first heat exchange passages are arranged in at least one first heat exchanger alternately with passages through which said heat exchange fluid is able to be passed. Similarly, the second heat exchange passages are preferably arranged in at least one second heat exchanger alternately with heat exchange passages through which the heat exchange fluid is able to be passed.

The method and apparatus according to the invention are particularly suitable for boiling liquid oxygen. In this example, the heat exchange fluid is preferably nitrogen, which is itself preferably at least partially condensed during the heat exchange. The source of the liquid oxygen is preferably a liquid-vapour contact means in a rectification column in which air is separated to produce the oxygen. The first heat exchange passages are accordingly preferably located below such liquid-vapour contact means so as to enable the liquid oxygen to be fed by gravity to the set of first heat exchange passages from, for example, an intermediate tank. Furthermore, in this example of the method and apparatus according to the invention, the vessel that contains the volume of the liquefied gas is the sump of a lower pressure rectification column forming part of a double rectification column comprising the lower pressure column and a higher pressure column.

The flow of liquefied gas through the second heat exchange passages is preferably effected by having each such passage open at its bottom end to the volume of liquefied gas, and maintaining a height of liquefied gas in the container such that the heating of the second heat transfer surfaces to boil the liquefied gas causes a continuous flow of liquid oxygen through these passages by a thermosiphon effect.

Each heat transfer surface of an apparatus according to the invention preferably comprises a metal or alloy of relatively high thermal conductivity, such as copper, or aluminium or an alloy based on copper or aluminium. In accordance with the invention, each first heat exchanger surface comprises a porous metallic coating of the kind in which the pores are open and therefore communicate with one another. Such a porous coating encourages a homogeneous distribution of the film of liquefied gas on the surface. The coating may be of the same or a different composition from the surface to which it is applied. Preferably, the coating is formed by depositing a mixture of particles of the desired metal or metal alloy and particles of a suitable plastics material (or particles of a performed composite of the metal and the plastics material) onto a substrate so as to form a coating comprising particles of plastics material embedded in the metal. The resultant coating is then heated to volatilise the plastics material, thereby removing it and leaving a porous metal coating including a multitude of irregular, interconnected, re-entrant cavities. The plastics-metallic coating may be deposited by flame spraying or, preferably, plasma spraying.

A method and apparatus according to the invention will now be described by way of example with reference to the accompanying drawings, in which:
Figure 1 is a schematic front view, partly in section, of a condenser-reboiler according to the invention forming part of an air separation apparatus comprising a higher pressure column and a lower pressure column;
Figure 2 is a schematic perspective view of part of a heat exchanger forming part of the apparatus shown in Figure 1, the heat exchanger being of a kind in which a falling film of liquid oxygen is partially boiled;
Figure 3 is a schematic partial exploded perspective view, partly cut away, of the heat exchanger shown in Figure 2;
Figure 4 is a schematic cross-section taken through a condensing passage of the heat exchanger shown in Figures 2 and 3; and
Figure 5 is an exploded perspective view, partly cut away, of the part of another of the heat exchangers shown in Figure 1.

The drawings are not to scale.

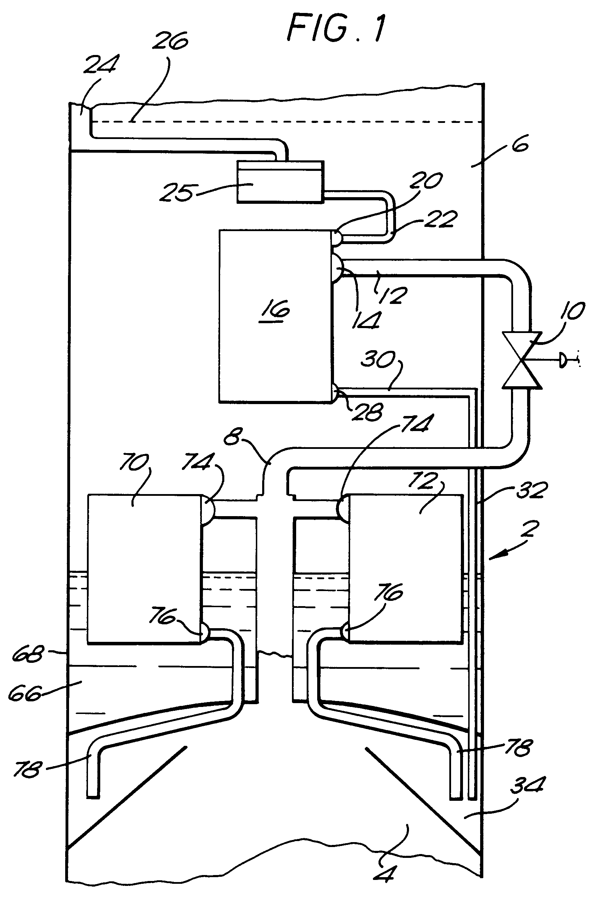

Referring to Figure 1 of the drawings, there is shown part of a double rectification column 2 for separating air. The double rectification column 2 comprises a higher pressure rectification column 4 of which the top part is shown in Figure 1 and a lower pressure rectification column 6 of which the bottom part is shown in Figure 1. As is well known in the art the higher pressure column 4 is effective to separate air into nitrogen and oxygen-enriched air fractions. A main outlet pipe 8 conducts nitrogen vapour out of the top of the column 4. The pipe 8 has a flow control valve 10 located therein and terminates in an inlet 12 to a nitrogen vapour header 14 forming part of a first heat exchanger 16 which in operation is used to boil liquid oxygen by heat exchange with the nitrogen vapour, the nitrogen vapour thereby being at least partially condensed. (The heat exchanger 16 can thus be described as a condenser-reboiler.)

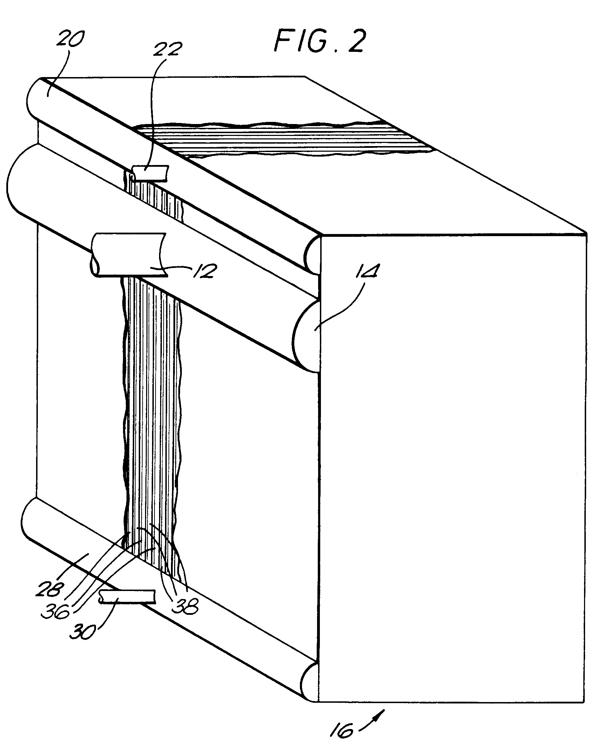

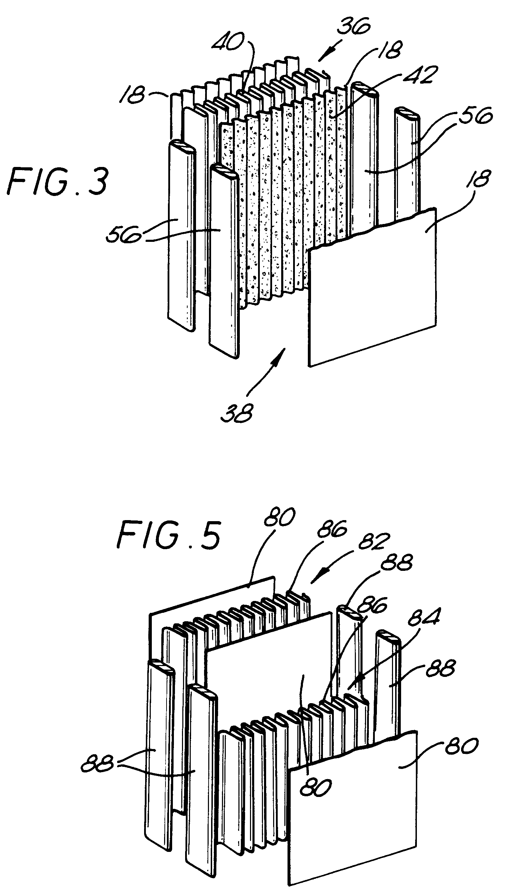

The heat exchanger 16 is depicted in Figures 2 to 4 of the accompanying drawings, and the ensuing description is with reference, as appropriate, to Figures 2 to 4 as well as Figure 1. The main body of the heat exchanger 16 comprises a set of alternate passages for boiling liquid oxygen and condensing nitrogen vapour. The passages are defined by a multiplicity of spaced apart parallel plates 18 (see in particular Figures 2 and 3). The heat exchanger 16 also has at its top a header 20 for liquid oxygen. The header 20 has an inlet 22 which communicates with a tank 25 adapted in use to provide a steady flow of liquid oxygen under gravity to the header 20. The tank 25 communicates in turn with a downcomer 24 which provides a passage for liquid oxygen from the bottom of liquid-vapour contact means 26 in the lower pressure column 6 to the tank 25. The liquid-vapour contact means typically comprises an array of distillation trays, and the bottom of the liquid-vapour contact means 26 therefore typically comprises the bottom distillation tray. (It is alternatively possible to use a liquid-vapour contact means comprising a structured packing.) At the bottom of the heat exchanger 16 is an outlet header 28 for condensed nitrogen vapour. The header 28 has an outlet 30 communicating with a pipe 32 which returns the condensed nitrogen vapour to a reservoir 34 in the higher pressure column 4.

Referring particularly to Figures 2 and 3 of the drawings, the plates 18 define alternate condensing passages 36 and boiling passages 38. The top of each condensing passage 36 communicates with the gaseous nitrogen header 14 and the bottom of each such passage 36 communicates with the liquid nitrogen header 28. The top of each boiling passage 38 communicates with the liquid oxygen header 20 while the bottom of each such passage is open so that unboiled liquid oxygen, and oxygen vapour, can pass freely out of the bottom of the heat exchanger 16.

As best shown in Figure 3, each condensing passage 36 is provided with fins of heat conductive metal. The fins are provided by a corrugated sheet of metal 40 in each passage 36. Each sheet 40 is in heat conductive relationship with and joined to the respective surfaces of the plates 18 defining the respective passage 36. Typically, the sheet 40 is joined to the respective surfaces of the plates 18 defining the passage 36 by vacuum brazing, a technique well known in the art. If desired, the sheet 40 may be formed with serrations (not shown in the drawings) in it so as to promote good distribution of the fluid in each condensing passage 36.

Referring again to Figure 3, the plate surfaces defining each passage 38 preferably have a porous metal coating 42 that encourages a homogeneous distribution of a film of liquid oxygen on the surface. The porous coating may generally be of the kind described in our European patent application EP-A-303 493. The coating 42 may be of the same or a different composition from the surface to which it is applied. Typically, the coating is of aluminium, or copper, or an alloy based on one of these metals. The coating is preferably formed by depositing a mixture of particles of the desired metal and particles of a suitable plastics material (or, instead of the mixture, particles of a performed composite of metals and plastics material) onto the respective surfaces of the plates 18 to form a coating comprising particles of plastics material embedded in the metal. The resulting coating is then heated to volatilise the plastics material, thereby removing it, and leaving a porous metal coating including a multitude of irregular, interconnected cavities. The average pore size of the coating is typically in the range of 15 to 50 microns and the resulting coating typically has a porosity of from 20 to 60%. Suitable plastics materials vaporise at temperatures of at least 500°C, and typically from about 500 to 600°C, without leaving a carbonaceous or other residue. Preferred plastics materials are polyesters.

A typical manufacturing procedure for preparing the coating 42 is to mask those surfaces of the plate 18, which are typically of aluminium, in the regions where the porous surface is not needed, that is to say those regions which are to be joined to other members such as support bars and edge bars. The unmasked surface is then blasted with a fine grit or shot in order to remove any aluminium oxide on the surface and so as to facilitate formation of a good bond between the plate 18 and the coating 42. A mixture of a suitable aluminium alloy powder and polyester powder is then applied using a plasma gun which typically has gas feed lines for gases which can be employed to form a suitable plasma, for example helium and hydrogen, a suitable electrode/nozzle arrangement, and a powder feed line. An arc is struck between the electrode and the plate, typically at an amperage of 500 amps, and hydrogen and helium are fed through the electrode into the vicinity of the arc so as to create an intense plasma flame from the gases. The powder is fed into the hottest part of the flame. The electrical current and the rate of flow of the gases may be controlled by conventional means. In addition, there is preferably apparatus for controlling the flow of polyester powder. The plasma gun is preferably mounted on a carriage which is operable to move the gun forwards and backwards and across the plate. Typically, the respective surface of each plate 18 may be coated employing two or three passes of the plasma gun. Once the plate is coated, the masking may be removed and the plate placed into an oven, in which the polyester is removed by direct oxidation with air, typically at a temperature in the range 500 to 600°C. The plate is then cooled and may be incorporated into the heat exchanger 16. Further information about the manufacture of such surfaces is disclosed in our European patent application EP-A- 303 493.

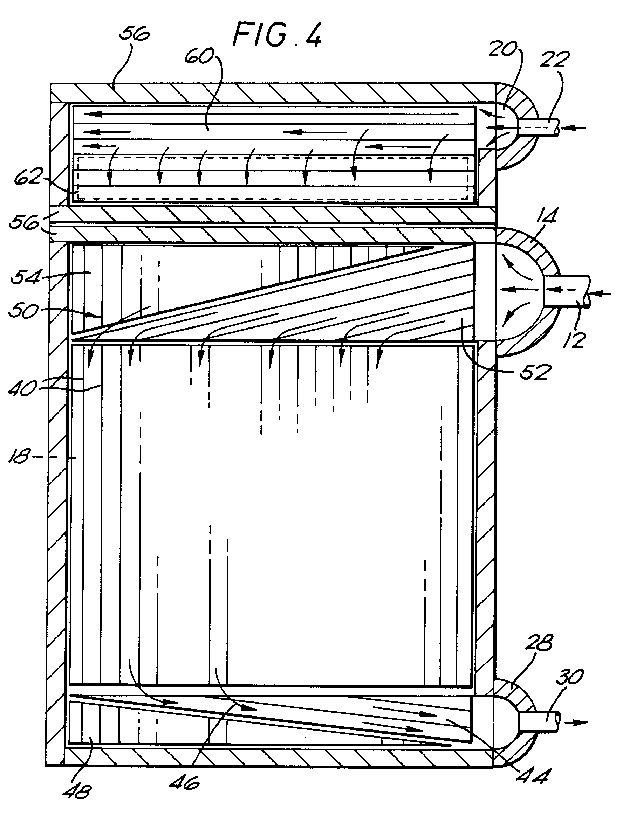

The porous coating or surface 42 provides a multiplicity of nucleation sites for the boiling of the liquid oxygen. Its effect therefore is to reduce the amount of superheating of the liquid oxygen that is required to effect boiling in comparison with a conventional thermosiphon boiler. Moreover, the liquid oxygen can be supplied to each boiling passage at substantially its saturation temperature, thereby enabling the amount of heating required to raise the liquid oxygen to its saturation temperature to be kept to a minimum. It is important in the operation of the heat exchanger 16 to ensure that there is a uniform distribution of liquid oxygen to each porous heat transfer surface 42 and to maintain a suitably uniform distribution of liquid film over each surface 42. Provided the liquid oxygen is uniformly distributed at the top of each heat transfer surface 42, the capillary action of the pores of such surface 42 has the effect of helping to maintain the relatively uniform distribution of the liquid. The means employed in the heat exchanger 16 for obtaining relatively uniform distribution of the fluids flowing therethrough are best shown in Figure 4 of the drawings.

Figure 4 shows schematically one of the plates 18. The forward surface of the plate 18 shown in Figure 4 defines a wall of a condensing passage 36. Figure 4 thus in effect shows a condensing passage 36 with a forward plate 18 removed. At the bottom of the condensing passage 36 is a liquid nitrogen collector 44 which communicates with the header 28 and which extends from one side to the other of the plate 18. In order to promote the collection of condensed liquid nitrogen from all parts of the condensing surface, the collector 44 is provided with two sets of perforate distributor fins 46 and 48 respectively. Both the sets of fins 46 and 48 take the form of corrugated strips of metal (e.g. aluminium). In the set 46, the corrugations run at a slight angle to the horizontal, while in the set 48 the corrugations run vertically. The arrangement ensures that there is a uniform distribution of liquid nitrogen in the collector and thus there is a smooth flow of liquid nitrogen from the condensing passage into the outlet 30 of the header 28. The sets of fins 46 and 48 are preferably permanently joined to the respective plates 18 defining the passage 36, for example by vacuum brazing.

Located above the collector 44 are the main heat transfer fins associated with the passage 36. As described above with reference to Figure 3, the fins are defined by a corrugated sheet 40 disposed so that the corrugations run vertically. The top of the sheet 40 terminates well below the top of each associated plate 18. A distributor chamber 50 for the nitrogen vapour to be condensed in the passage 38 is located above the fins 40. The distributor chamber 50 communicates with the header 14 and extends from one side to the other of the condensing passage 36. The chamber 50 is provided with two sets 52 and 54 of perforate distributor fins. Both sets 52 and 54 of fins are typically joined to the respective plates 18 and each comprises strips of corrugated metal, typically aluminium. In the set 52 of fins, the corrugations run at an angle to the horizontal with the end of each corrugation remote from the header 14 being at a lower level than the opposite end. The set 54 of distributor fins have corrugations that run downwards. In operation, the sets 52 and 54 of distributor fins ensure that the gaseous nitrogen is uniformly distributed across the passage 36.

The passage 36 is provided with sealing bars 56 along its top, side and bottom edges. The sealing bars 56 are each joined to the respective surfaces of the plates 18 defining the passage 36, for example by being vacuum brazed thereto.

As shown in Figure 4, each plate 18 extends above the top of its associated condensing passage 36. Above the gaseous nitrogen distributor 50 for the passage 36 there is a liquid oxygen distributor 58 which communicates with the liquid oxygen header 20 and which is able to distribute liquid oxygen to the two boiling passages 38 (not shown in Figure 4) which are adjacent the condensing passage 36. The distributor 58 takes the form of a chamber which extends across the respective plates 18 from one side to the other and which contains a perforate strip 60 of corrugated metal (of a kind sometimes referred to in the art as "hardway fins") whose corrugations run horizontally from one side to the other of the distributor chamber 58. In operation, the strip 60 ensure a uniform distributor of liquid oxygen in the distributor chamber 58. There is an elongate horizontal slot 62 in each plate 18 bounding the chamber 58 (only one such slot 62 is shown in Figure 4) through which liquid oxygen flows out of the chamber 58 into the adjacent boiling passages 38 (not shown in Figure 4). In operation, there is thus a uniform flow of liquid oxygen into the top of each boiling passage 38 and the formation of uniform boiling films of liquid oxygen on the porous heat transfer surfaces bounding the boiling passages 38 is thereby facilitated.

Further sealing or spacer bars 56 are joined (for example, by vacuum brazing) to the facing surfaces of each pair of plates 18 defining a condensing passage 36 at the top, sides and bottom of the distributor chamber 58.

The illustrated chambers for distributing fluids to and from the heat exchanger 16 but some of many alternative arrangements that can be used to distribute fluids to and from the heat exchanger 16. See, for example, US patent No 3 559 722.

As shown in Figure 3, sealing bars 56 are also provided at the sides and the top of each condensing passage 36. As previously described, however, each boiling passage 38 is open at its bottom to enable oxygen vapour and residual liquid to flow therethrough. The oxygen vapour ascends the lower pressure column 6 and comes again into mass transfer relationship with descending liquid in the liquid-vapour contact means 26. The residual liquid is collected as will be described below.

The dimensions of the heat exchanger 16 will typically be related to the size of the lower pressure column 6 and the rate at which the air separation plant is required to produce products. Typically, it may have a height of from 1 to 2 metres and in horizontal cross-section be from 1 to 2 metres square. The distance between each pair of adjacent plates 18 may typically be in the range of 5 to 10mm.

Referring again to Figure 1 of the drawings, the liquid oxygen leaving the heat exchanger 16 from the bottom of the boiling passages 38 (see Figure 3) falls into a volume of liquid oxygen 66 in a sump 68 of the lower pressure column. The sump 68 will also receive any overflow from the tank 25. Further boiling of the liquid oxygen in the sump 68 is provided by means of heat exchangers 70 and 72 which are partially immersed in the liquid oxygen. Both the heat exchangers 70 and 72 are of the plate-fin kind, the plates defining alternate passages for boiling liquid oxygen and for condensing nitrogen vapour (which is used as a heat transfer medium to effect the boiling of the liquid oxygen, the nitrogen itself being condensed). The heat exchangers 70 and 72 each have an inlet header 74 for nitrogen vapour communicating with the outlet pipe 8 from the top of the higher pressure column 4. The header 74 communicates with each of a multiplicity of nitrogen condensing passages (not shown in Figure 1), each having a nitrogen vapour distribution chamber (not shown) analogous to the chamber 50 shown in Figure 4. The nitrogen flows down each of the passages and is at least partially condensed. Each condensing passage is provided with a liquid nitrogen collection chamber (not shown) analogous to the collector 44 shown in Figure 4. Each such chamber in the heat exchanger 70 and 72 communicates with an outlet header 76. Both the outlet headers 76 are respectively connected to pipes 78 which conduct the liquid nitrogen condensed in the heat exchanger 70 and 72 into the reservoir 34 in the higher pressure column 4.

Unlike the heat exchanger 16 shown in Figures 2 to 4 of the accompanying drawings, the heat exchanger 70 and 72 have no headering for providing for a flow of oxygen through the boiling passages. Each such boiling passage is open both its bottom and its top. The head of liquid oxygen in the sump 68 causes liquid oxygen to enter each boiling passage through its bottom and the level of the liquid oxygen within the boiling passages tends to rise to that of the liquid oxygen in the sump 68. The oxygen begins to boil and thus the liquid level in the boiling passages would fall were it not for the fact that the liquid oxygen head in the sump 68 causes sufficient liquid to enter the bottom of the boiling passages to restore the liquid oxygen level therein. This effect is known as 'thermosiphoning', as previously mentioned herein. There is accordingly a continuous flow of liquid oxygen into the bottom of each boiling passage of the heat exchanger 70 and 72 and therefore a continuous flow of oxygen through each such passage. Resulting vaporised oxygen leaves each boiling passage through its open top and continues to rise through the lower pressure column 6, coming into mass transfer relationship with descending liquid in the liquid-vapour contact means 26.

It will be appreciated that all the liquid oxygen separated from the air in the lower pressure column 6 reaches the sump 68 at a uniform temperature. Thus, the liquid oxygen at the surface of the volume 66 will be at its saturation temperature. However, the additional pressure of the head of liquid oxygen in the sump 68 means that the liquid entering the boiling passages of the heat exchanger 70 and 72 is below its saturation temperature at the prevailing pressure. Thus, before boiling can commence in the boiling passages, the liquid oxygen is first heated to above its saturation temperature at the prevailing pressure. The temperature range through which the liquid oxygen needs to be heated before boiling commences therefore increases with increasing depth of the volume 66 of the liquid oxygen. By boiling some of the liquid oxygen in the heat exchanger 16, the depth of the volume 66 of liquid oxygen is effectively reduced. Accordingly, the temperature range through which the liquid oxygen needs to be heated in the heat exchanger 70 and 72 before boiling commences is reduced in comparison with a comparable arrangement in which the heat exchanger 16 is omitted. In practice, one consequence is that the boiling passages in the heat exchanger 70 and 72 are able to be operated with a lower wall temperature than would otherwise be possible. Accordingly, the liquid nitrogen may be supplied at its saturation temperature at a lower pressure to the heat exchangers 70 and 72. In effect, therefore, the pressure at the top of the higher pressure column 4 is reduced and thus the amount of work that needs to be performed in compressing the air to be separated is reduced since the air can be compressed to a correspondingly lower pressure.

The heat exchangers 70 and 72 are typically of conventional construction and manufacture. A typical construction is illustrated in Figure 5 of the drawings. The heat exchanger comprises an array of vertical, parallel, plates 80 having heat transfer surfaces. The plates 80 define therebetween alternate condensing passages 82 for nitrogen and boiling passages 84 for oxygen. (In Figure 5 one such condensing passage 82 and one such boiling passage 84 are shown.) The passages 82 and 84 are each provided with a secondary finned surface to enhance heat transfer. Each such finned surface takes the form of a corrugated sheet 86 of metal; with the corrugations running vertically. As shown in Figure 5, sealing bars 88 are provided at the sides of the array of plates 80. For ease of illustration, the necessary distributor of gaseous nitrogen and collector of liquid nitrogen associated with the passage 82 are not shown in Figure 5. Similarly, the sealing bars at the top and bottom of each such passage are also omitted from Figure 5.

Referring again to Figure 1 of the drawings, although only one falling film heat exchanger 16 and two heat exchangers (70 and 72) of the thermosiphoning kind are shown, this is primarily for ease of illustration, and generally, large air separation columns will contain an array of each kind of heat exchanger. Typically, it may be arranged that from 20 to 50% of the liquid oxygen may be boiled in falling film heat exchangers, and the remainder by use of heat exchangers that boil the liquid oxygen using a thermosiphon effect. Further, we believe that it is generally possible to include all the necessary heat exchangers within the bottom portion of the lower pressure column 6 without the need to have that part of the lower pressure column 6 of wider diameter than the part thereof that contains the liquid-vapour contact means 26.

The control valve 10, shown in Figure 1, may be a simple baffle valve set to ensure that there is an adequate level of liquid oxygen in the sump 68 for safe operation.

## Claims

1. A method of boiling a liquefied gas, comprising creating a falling film of the liquefied gas down each of a multiplicity of first heat transfer surfaces defining a set of first heat exchange passages for boiling liquefied gas, heating the first surfaces so as to boil some of the descending liquid, allowing unboiled liquefied gas to fall into a volume of the liquefied gas below said first surfaces, in which volume are at least partially immersed a multiplicity of second heat transfer surfaces defining a set of second passages for boiling the liquefied gas, causing liquefied gas to flow through the second passages, and heating the second heat transfer surfaces so as to boil at least some of the liquefied gas passing through the second passages, each first heat exchange surface having nucleation sites for the formation of vapour bubbles, the nucleation sites being provided by a porous metal coating in which the pores are open and communicate with one another.

2. A method as claimed in claim 1, in which the first and second heat transfer surfaces are each heated by a heat exchange fluid comprising a condensing vapour of different composition from the liquefied gas, the first heat exchange passages are arranged alternately in at least one first heat exchanger with passages through which said heat exchange fluid is able to be passed, and the second heat exchange passages are arranged alternately in at least one second heat exchanger with heat exchange passages through which the heat exchange fluid is able to be passed.

3. A method as claimed in claim 2, in which the liquefied gas is liquid oxygen, and the heat exchange fluid is nitrogen.

4. A method as claimed in claim 3, in which the source of the liquid oxygen is a liquid-vapour contact means in a rectification column in which air is separated, the first heat exchange passages are located below the liquid-vapour contact means so as to enable the liquid oxygen to be fed by gravity thereto.

5. A method as claimed in claim 4, in which the said volume of the liquefied gas is contained in the sump of a lower pressure rectification column forming part of a double rectification column comprising said lower pressure rectification column and a higher pressure rectification column from which heat exchange fluid comprising nitrogen is supplied.

6. A method as claimed in any one of claims 3 to 5, in which the flow of liquefied gas through the second heat exchange passages is effected by having each such passage open at its bottom end to the volume of liquefied gas, and maintaining a height of liquefied gas such that the heating of the second heat transfer surfaces to boil the liquefied gas causes a continues flow of liquefied gas through these passages by a thermosiphon effect.

7. Apparatus for boiling a liquefied gas, comprising a multiplicity of first heat transfer surfaces defining a set of first heat exchange passages each for boiling a falling film of liquefied gas, said first passages having outlets arranged to permit in use unboiled liquid to fall into a vessel adapted to contain below said outlets a volume of the liquefied gas, means for heating said first heat transfer surfaces so as in operation to boil some of the descending liquid, a multiplicity of second heat exchange passages for boiling the liquefied gas, said second heat exchange passages being adapted for the flow of the liquefied gas therethrough and being disposed such that in use they are at least partially immersed in a volume of liquefied gas in a container, and means for heating the second heat transfer surfaces so as to boil at least some of the liquefied gas passing therethrough, each first heat exchange surface having nucleation sites for the formation of vapour bubbles, the nucleation sites being provided by a porous coating in which the pores are open and communicate with one another.

8. Apparatus as claimed in claim 7, in which the first heat exchange passages are arranged in at least one first heat exchanger alternately with passages through which a heat exchange fluid is able to be passed, the second heat exchange passages are arranged alternately in at least one second heat exchanger with heat exchange passages through which a heat exchange fluid is able to be passed.

9. Apparatus as claimed in claim 8, in which the heat exchangers are located in a rectification column.

10. Apparatus as claimed in claim 9, additionally including an intermediate tank for feeding liquid oxygen from a liquid-vapour contact means in the rectification column to said at least one first heat exchanger.

11. Apparatus as claimed in claim 10, in which the container of said volume of liquefied gas is the sump of a lower pressure rectification column, said column forming part of a double rectification column comprising the lower pressure rectification column and a higher pressure rectification column.

12. Apparatus as claimed in any one of claims 7 to 11, in which the second heat exchange passages are open at their bottom, and the height of liquefied gas in the container is such that the heating of the second heat transfer surfaces, in operation, to boil the liquefied gas causes a continuous flow of liquefied gas through these passages by a thermosiphon effect.

## Patentansprüche

1. Ein Verfahren zum Sieden eines verflüssigten Gases, welches es umfaßt, daß ein fallender Film des verflüssigten Gases herab von jeder einer Vielzahl von ersten Wärmeübertragungsoberflächen geschaffen wird, die einen Satz von ersten Wärmeaustauschdurchtritten zum Sieden verflüssigten Gases festlegen, die ersten Oberflächen erwärmt werden, um so einiges der absteigenden Flüssigkeit zu sieden, dem nicht gesiedeten verflüssigten Gas erlaubt wird, in ein Volumen des verflüssigten Gases unterhalb der ersten Oberflächen zu fallen, in welchem Volumen zumindest partiell eine Vielzahl von zweiten Wärmeübertragungsoberflächen eingetaucht sind, die einen Satz von zweiten Durchtritten zum Sieden des verflüssigten Gases festlegen, das verflüssigte Gas dazu veranlaßt wird, durch die zweiten Durchtritte zu fließen, und die zweiten Wärmeübertragungsoberflächen erwärmt werden, um so zumindest einiges des verflüssigten Gases, das durch die zweiten Durchtritte tritt, zu sieden, wobei jede erste Wärmeaustauschoberfläche Nukleationsstellen für die Bildung von Dampfblasen aufweist, die Nukleationsstellen durch einen porösen Metallüberzug vorgesehen sind, in welchem die Poren offen sind und miteinander kommunizieren.

2. Ein Verfahren nach Anspruch 1, in welchem die ersten und zweiten Wärmeübertragungsoberflächen jede durch ein Wärmeaustauschfluid erwärmt werden, welches einen Kondensierenden Dampf von unterschiedlicher Zusammensetzung zu dem verflüssigten Gas umfaßt, wobei die ersten Wärmeaustauschdurchtritte alternierend in zumindest einem ersten Wärmeaustauscher mit Durchtritten angeordnet sind, durch welche das Wärmeaustauschfluid fähig ist, durchgeführt zu werden, und die zweiten Wärmeaustauschdurchtritte alternierernd in zumindest einem zweiten Wärmeaustauscher mit Wärmeaustauschdurchtritten angeordnet sind, durch welche das Wärmeaustauschfluid fähig ist, durchgeführt zu werden.

3. Ein Verfahren nach Anspruch 2, in welchem das verflüssigte Gas flüssiger Sauerstoff und das Wärmeaustauschfluid Stickstoff ist.

4. Ein Verfahren nach Anspruch 3, in welchem die Quelle des flüssigen Sauerstoffs ein Flüssigkeits-Dampf-Kontaktmittel in einer Rektifikationskolonne, in welcher Luft getrennt wird, ist, wobei die ersten Wärmeaustauschdurchtritte unterhalb des Flüssigkeit-Dampf-Kontaktmittels angeordnet sind, um so den flüssigen Sauerstoff zu befähigen, durch Gravitiation dazu gespeist zu werden.

5. Ein Verfahren nach Anspruch 4, in welchem das Volumen des verflüssigten Gases in dem Sumpf einer Rektifikationskolonne mit niedrigerem Druck, die einen Teil einer Doppelrektifikationskolonne bildet, die die Rektifikationskolonne mit niedrigerem Druck und eine Rektifikationskolonne mit höherem Druck, aus welcher das Wärmeaustauschfluid, das Stickstoff umfaßt, geliefert wird, enthalten ist.

6. Ein Verfahren nach einem der Ansprüche 3 bis 5, in welchem der Fluß von verflüssigtem Gas durch die zweiten Wärmeaustauschdurchtritte bewirkt wird, indem jeder derartige Durchtritt an seinem Bodenende zu dem Volumen des verflüssigten Gases offen ist, und eine Höhe von verflüssigtem Gas derart aufrecht erhalten wird, daß die Erwärmung der zweiten Wärmeübertragungsoberflächen, um das verflüssigte Gas zu sieden, einen kontinuierlichen Fluß von verflüssigtem Gas durch diese Durchtritte durch einen Thermosiphoneffekt veranlaßt.

7. Vorrichtung zum Sieden eines verflüssigten Gases mit einer Vielzahl von ersten wärmeübertragungsoberflächen, die einen Satz von ersten Wärmeaustauschdurchtritten festlegen, von denen jeder zum Sieden eines fallenden Filmes von verflüssigtem Gas dient, wobei die ersten Durchtritte Auslässe aufweisen, die so angeordnet sind, daß beim Gebrauch nicht gesiedete Flüssigkeit in ein Gefäß fallen kann, das dazu angepaßt ist, unterhalb der Auslässe ein Volumen des verflüssigten Gases zu enthalten, einem Mittel zum Erwärmen der ersten warmeübertragungsoberflächen, um so im Betrieb einiges der absteigenden Flüssigkeit zu sieden, einer Vielzahl von zweiten Wärmeaustauschdurchtritten zum Sieden des verflüssigten Gases, wobei die zweiten Wärmeaustauschdurchtritte für den Fluß des verflüssigten Gases dort hindurch angepaßt sind und derart angeordnet sind, daß sie beim Gebrauch zumindest partiell in einem Volumen des verflüssigten Gases in einem Behälter eingetaucht sind, und einem Mittel zum Erwärmen der zweiten Wärmeübertragungsoberflächen, um so zumindest einiges des verflüssigten Gases, das dort hindurchtritt, zu sieden, wobei jede erste wärmeaustauschoberfläche Nukleationsstellen für die Bildung von Dampfblasen aufweist und die Nukleationsstellen durch einen porösen Überzug, in welchem die Poren offen sind und miteinander kommunizieren, vorgesehen sind.

8. Vorrichtung nach Anspruch 7, in welcher die ersten Wärmeaustauschdurchtritte in zumindest einem ersten Wärmeaustauscher alternierend mit Durchtritten angeordnet sind, durch welche ein Wärmeaustauschfluid durchgeführt werden kann, die zweiten Wärmeaustauschdurchtritte alternierend in zumindest einem zweiten Wärmeaustauscher mit Wärmcaustauschdurchtritten, durch welche ein wärmeaustauschfluid durchgeführt werden kann, angeordnet sind.

9. Vorrichtung nach Anspruch 8, in welcher die Wärmeaustauscher in einer Rektifikationskolonne angeordnet sind.

10. Vorrichtung nach Anspruch 9, die zusätzlich einen dazwischenliegenden Behälter zum Speisen von flüssigem Sauerstoff aus einem Flüssigkeits-Dampfkontaktmittel in der Rektifikationskolonne zu dem zumindest einen ersten wärmeaustauscher umfaßt.

11. Vorrichtung nach Anspruch 10, in welcher der Behälter des Volumens von verflüssigtem Gas der Sumpf einer Rektifikationskolonne mit niedrigerem Druck ist, wobei die Kolonne einen Teil einer Doppelrektifikationskolonne bildet, die die Rektifikationskolonne mit niedrigerem Druck und eine Rektifikationskolonne mit höherem Druck umfaßt.

12. Vorrichtung nach einem der Ansprüche 7 bis 11, in welcher die zweiten Wärmeaustauschdurchtritte an ihrem Boden offen sind und die Höhe des verflüssigten Gases in dem Behälter derart ist, daß die Erwärmung der zweiten Wärmeübertragungsoberflächen im Betrieb, um das verflüssigte Gas zu sieden, einen kontinuierlichen Fluß von verflüssigtem Gas durch diese Durchtritte durch einen Thermosiphoneffekt bewirkt.

## Revendications

1. Procédé d'ébullition d'un gaz liquéfié, comprenant la création d'un film de gaz liquéfié ruisselant en tombant le long de chacune des plusieurs premières surfaces de transfert de chaleur délimitant un groupe de premiers passages d'échange de chaleur pour faire bouillir du gaz liquéfié, le chauffage des premières surfaces de façon à faire bouillir une partie du liquide descendant, le fait de laisser le gaz liquéfié et qui n'a pas bouilli tomber dans un volume de gaz liquéfié situé au-dessous desdites premières surfaces, volume dans lequel sont au moins partiellement immergées plusieurs seconde surfaces de transfert de chaleur délimitant un groupe de seconds passages pour faire bouillir le gaz liquéfié, le fait d'obliger le gaz liquéfié à s'écouler en empruntant les seconds passages, et le chauffage des secondes surfaces de transfert de chaleur de façon à faire bouillir au moins une partie du gaz liquéfié empruntant les seconds passages, chaque première surface d'échange de chaleur ayant des sites de nucléation pour la formation de bulles de vapeur, les sites de nucléation étant fournis par un revêtement de métal poreux dans lequel les pores sont ouverts et communiquent l'un avec l'autre.

2. Procédé tel que revendiqué à la revendication 1, dans lequel les premières et secondes surfaces d'échange de chaleur sont chacune chauffées par un fluide pour échange de chaleur, comprenant une vapeur en cours de condensation et dont la composition est différente de celle du gaz liquéfié les premiers passages d'échange de chaleur sont disposés en alternance dans au moins un premier échangeur de chaleur comportant des passages que ledit fluide pour échange de chaleur peut emprunter pour sa circulation, et les seconds passages pour échange de chaleur sont disposés en alternance dans au moins un second échangeur de chaleur comportant des passages pour échange de chaleur que le fluide pour échange de chaleur peut emprunter pour son passage de circulation.

3. Procédé tel que revendiqué à la revendication 2, dans lequel le gaz liquéfié est de l'oxygène liquide, et le fluide pour échange de chaleur, ou fluide caloporteur, est de l'azote.

4. Procédé tel que revendiqué à la revendication 3, dans lequel la source de l'oxygène liquide est un moyen de mise en contact liquide-vapeur dans une colonne de rectification dans laquelle l'air est soumis à une séparation (en ses constituants), les premiers passages pour échange de chaleur sont situés au-dessous du moyen de mise en contact liquide-vapeur, de façon à permettre à l'oxygène liquide de les alimenter par gravité.

5. Procédé tel que revendiqué à la revendication 4, dans lequel ledit volume du gaz liquéfié est contenu dans le collecteur inférieur d'une colonne de rectification à basse pression faisant partie d'une double colonne de rectification comprenant ladite colonne de rectification à basse pression et une colonne de rectification à plus haute pression assurant l'alimentation en du fluide pour échange de chaleur, ou fluide caloporteur, comprenant de l'azote ou constitué par de l'azote.

6. Procédé tel que revendiqué dans l'une quelconque des revendications 3 à 5, dans lequel l'écoulement de gaz liquéfié empruntant les seconds passages d'échange de chaleur est réalisé du fait que chacun de ces passages est, à son extrémité inférieure, ouvert vers le volume de gaz liquéfié et du fait que l'on maintient ou entretient une hauteur de gaz liquéfié telle que le chauffage des secondes surfaces de transfert de chaleur pour faire bouillir le gaz liquéfié provoque, par un effet de thermosiphon, un écoulement continu du gaz liquéfié passant par ces passages.

7. Appareil pour faire bouillir un gaz liquéfié, comprenant plusieurs premières surfaces de transfert de chaleur délimitant un groupe de premiers passages d'échange de chaleur dont chacun est destiné à faire bouillir un film de gaz liquéfié tombant par ruissellement, lesdits premiers passages ayant des sorties disposées de façon à permettre en service à du liquide qui n'a pas bouilli de tomber dans un récipient convenant bien pour contenir, au-dessous desdites sorties, un volume de gaz liquéfié ; un moyen pour chauffer lesdites premières surfaces de transfert de chaleur de façon à faire bouillir en service une partie du liquide descendant ; de multiples seconds passages d'échange de chaleur pour faire bouillir le gaz liquéfié, lesdits seconds passages d'échange de chaleur étant adaptés pour permettre l'écoulement du gaz liquéfié qui les emprunte et étant disposés de façon qu'en service ils soient au moins partiellement immergés dans un volume de gaz liquéfié présent dans un récipient, et un moyen pour chauffer les secondes surfaces de transfert de chaleur afin de faire bouillir au moins une partie du gaz liquéfié empruntant ces passages, chaque première surface d'échange de chaleur comportant des sites de nucléation pour la formation de bulles de vapeur, les sites de nucléation étant fournis par un revêtement poreux dans lequel les pores sont ouverts et communiquent l'un avec l'autre.

8. Appareil tel que revendiqué à la revendication 7, dans lequel que les premiers passages d'échange de chaleur sont disposés dans au moins un premier échangeur de chaleur en alternance avec des passages pouvant être empruntés par un fluide pour échange de chaleur, ou fluide caloporteur, les seconds passages d'échange de chaleur étant disposés, dans au moins un second échangeur de chaleur, en alternance avec des passages d'échange de chaleur que peut emprunter un fluide pour échange de chaleur.

9. Appareil tel que revendiqué à la revendication 8, dans lequel les échangeurs de chaleur sont situés dans une colonne de rectification.

10. Appareil tel que revendiqué à la revendication 9, comprenant en outre un réservoir intermédiaire pour fournir, à partir d'un moyen de mise en contact liquide-vapeur dans la colonne de rectification, de l'oxygène liquide audit au moins premier échangeur de chaleur.

11. Appareil tel que revendiqué à la revendication 10, dans lequel le récipient dudit volume de gaz liquéfié est constitué par le fond ou réservoir collecteur d'une colonne de rectification à basse pression, ladite colonne faisant partie d'une colonne double de rectification comprenant la colonne de rectification à basse pression et une colonne de rectification sous une pression plus élevée.

12. Appareil tel que revendiqué dans l'une quelconque des revendications 7 à 11, dans lequel les seconds passages pour échange de chaleur sont ouverts à leur partie inférieure, et la hauteur du gaz liquéfié présent dans le récipient est telle que le chauffage des secondes surfaces de transfert de chaleur pour faire bouillir le gaz liquéfié, en service, provoque par un effet de thermosiphon un écoulement en continu du gaz liquéfié empruntant ces passages.
